# EUROPEAN PATENT SPECIFICATION

(11) **EP 0 960 560 B1**
(45) Date of publication and mention of the grant of the patent: **09.04.2003**
(21) Application number: 99109019.2
(22) Date of filing: 07.05.1999
(51) Int. Cl.: A01D 78/12

(54) **Phase variator, paricularly for rotary oscillating reduction gears**
Phasenanlagevariator insbesondere für rotierendes , oszillierendes Reduktionsgetriebe
Variateur de phase pour engrenages réducteurs rotatifs, oscillants

(30) Priority: 11.05.1998 IT VI980098
(43) Date of publication of application: 01.12.1999
(73) Proprietor: Costruzioni Meccaniche Bertuzzo S.R.L., 36031 Deuville (VI) (IT)
(72) Inventor: Bertuzzo, Giuseppe, 36031 Dueville (VI) (IT)
(74) Representative: Forattini, Amelia

(56) References cited:
- EP-A- 0 590 311
- DE-A- 3 000 820
- DE-B- 1 221 481
- FR-A- 1 562 572
- GB-A- 1 238 528

## Description

The present invention relates to a phase variator, particularly for a rotary oscillating reduction gear, which is especially but not exclusively useful in the field of agricultural haymaking machines, such as for example windrowers and side-delivery rakes.

Conventionally, the rotary oscillating reduction gear of such machines is usually constituted by a central shaft which is supported by a sealed casing which can rotate about the shaft and by a cover which is arranged above the casing and is rigidly coupled to the central shaft. The cover generally supports a secondary shaft which is arranged substantially at right angles to the central shaft and has a splined end to be connected to a power take-off and another end provided with a conical set of teeth which is suitable to mesh with a ring gear which is fixed to the casing. The chamber formed by the walls of the casing accommodates a cylindrical cam which is rigidly coupled to the central shaft and has, on its lateral surface, a quasi spiral-shaped slot for accommodating a plurality of studs which are eccentrically connected to arms which are arranged radially at right angles to the central shaft and are accommodated in sleeves formed by casting or associated with the casing. In the above mentioned devices, the reduction unit is provided with a pair of free wheels, which are supported by an axle which is mounted at right angles on the central shaft, and with a rake which is provided with a plurality of teeth which are directed downward for each arm, and is then connected, by means of a lever system and of a cardan shaft, to the lifting means and to the power take-off of the tractor, respectively.

The need to have devices which allow easy and quick adjustments of the working phase of the arms of the reduction unit has always been strongly felt, especially by agricultural workers. A conventional type of variator comprises a disk which is keyed to the central shaft above the cover and which, when turned, moves the cylindrical cam into gradually successive positions by means of the shaft, thus modifying the working phase of the arms. This variator may be provided with the added feature of forming a free coupling between the cover and the central shaft. Another type of variator consists of a bush which is loosely inserted from below on the central shaft through the bottom of the casing and is rigidly coupled to the cam. The portion of the bush that protrudes from the bottom has a splined profile which couples to a ring provided with a lever. By turning the ring manually by means of the lever, the cam is turned and gradually assumes positions which vary the working phase of the arms. This operation is allowed by a free coupling between the cam and the shaft. In both cases it is necessary to provide for locking the disk and the lever by virtue of retainers, so as to maintain the set phase in working conditions.

The drawback noted in the first type is due to the fact that it allows a single adjustment of the phase which coincides with a half-turn of the cam. In the above cited devices, the central shaft is in fact rigidly coupled to the wheel axle and therefore rotations of less than a half-turn of the cam would arrange the wheels in a direction which is not parallel to the travel direction of the tractor, consequently preventing travel.

The drawback that can be observed in the other variator is mainly related to safety and practicality in use, since in order to manually actuate the lever the operator must reach down between the arms and the prongs of the rake, exposing himself to the risk of injury if the apparatus is accidentally started. Furthermore, this device, taken as is and arranged in an upward region at the cover, in order to obviate this drawback, is mechanically not valid, because the play between the bush and the shaft would entail early deterioration of the components owing to their demanding operating conditions.

GB-A-1238528 discloses a mechanism for the support and control of the rake wheel of a hay-harvesting machine according to the preamble of claim 1 of the present patent.

An aim of the present invention is to eliminate the cited drawbacks of prior art of rotary oscillating reduction units by providing a phase variator, particularly for a rotary oscillating reduction unit, and which allows the operator to gradually adjust the working phase of the arms in full safety.

An object of the invention is to provide a phase variator which does not act on the shaft of the reduction unit.

Another object of the invention is to provide a phase variator which can be entirely contained within the dimensions of current reduction units and accordingly entails little modification to the casings currently being manufactured.

Another object of the invention is to provide a phase variator which is composed of a reduced number of components which can be assembled with conventional workshop techniques and such that the reduction units that are provided with it can be manufactured at costs which are comparable to, if not lower than, those of conventional commercially available reduction units.

This aim, these objects and others which will become apparent hereinafter are achieved by a phase variator, as claimed in the appended claims.

Advantageously, the rotation means includes at least one hollow cylindrical body, which is rotatably coupled to the shaft and is provided with at least one fork tab, and at least one pivot which has a flat head at one of the ends which supports a tooth which is eccentric with respect to the pivot and engages the open hollow formed by the fork.

Further characteristics and advantages will become apparent from the description of a preferred but not exclusive embodiment of the phase variator, particularly for a rotary oscillating reduction unit, illustrated only by way of non-limitative example in the accompanying drawings, wherein:
Fig. 1 is a side view of a rotary oscillating reduction unit provided with a phase variator according to the invention;
Fig. 2 is a plan view of the reduction unit;
Fig. 3 is a sectional view, taken along the plane III-III of Fig. 2;
Fig. 4 is a sectional view, taken along the plane III-III, of a detail of the reduction unit;
Fig. 5 is a general view of the same detail;
Fig. 6 is a view of an application of the reduction unit provided with a variator according to the invention.

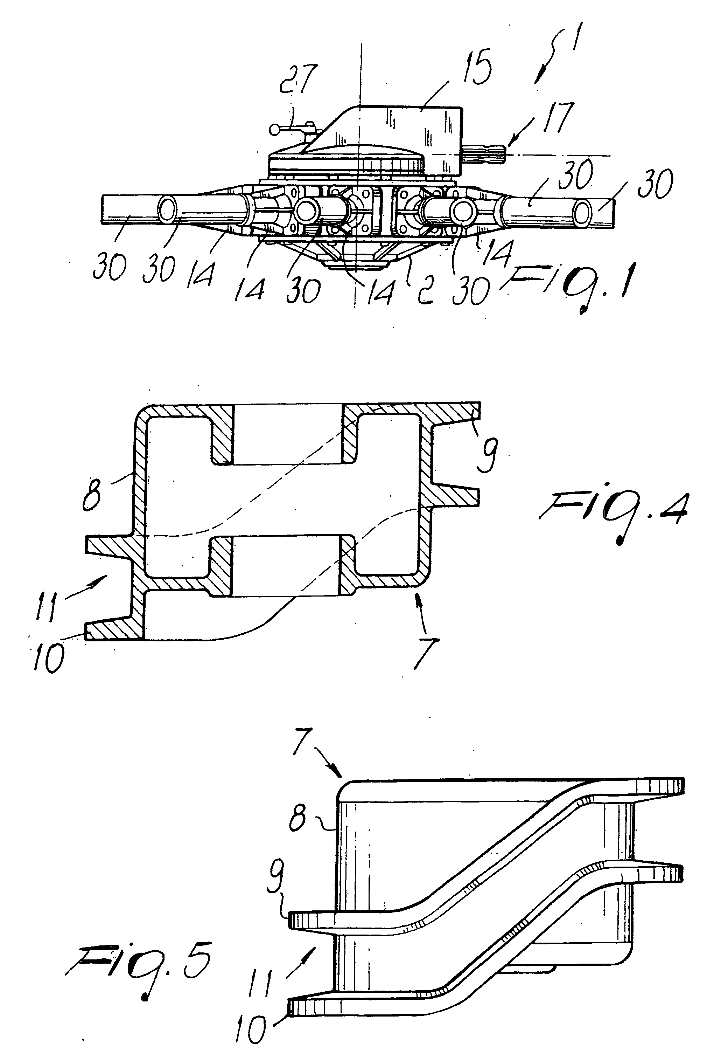

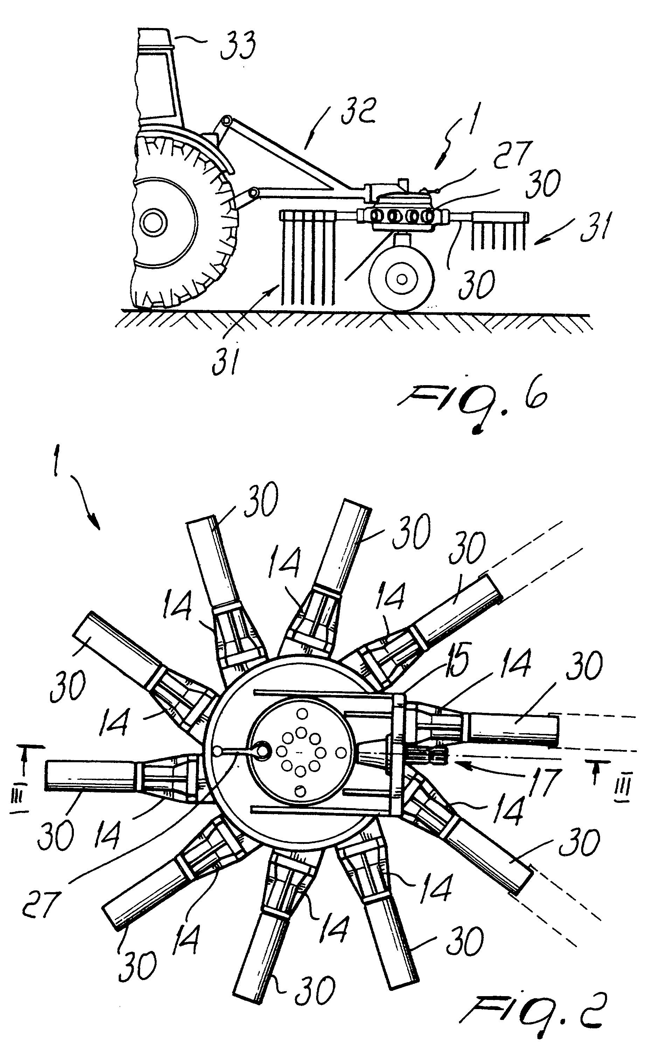

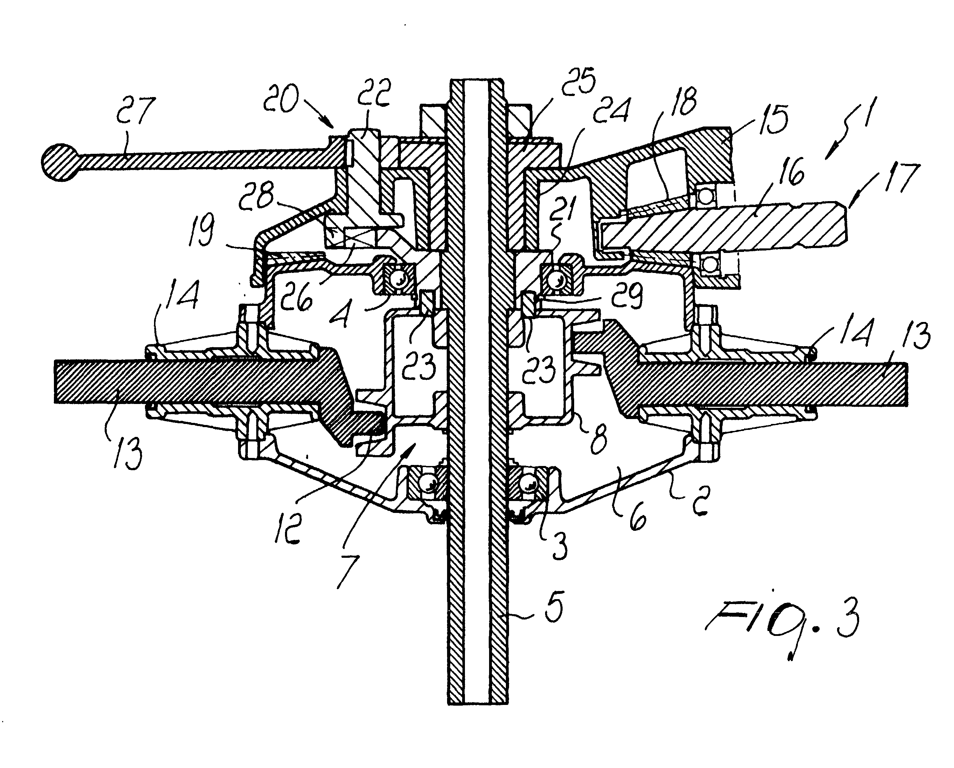

With reference to the above figures, the reduction unit, generally designated by the reference numeral 1, includes a casing 2 which supports a central shaft 5 by means of a pair of ball bearings 3 and 4. The casing 2 forms a toroidal cavity 6 which accommodates a cylindrical cam 7 which is rotatably coupled to the shaft 5 and whose lateral surface 8 supports a pair of edges 9 and 10 which delimit an almost spiral-shaped circumferential slot 11. The slot accommodates a plurality of studs 12 which are pivoted to, or monolithically formed in, oscillating arms 13, so as to be eccentric and parallel thereto. The arms are arranged radially at right angles to the shaft 5 and are accommodated within sleeves 14 which are associated with the lateral surface of the casing 2. A cover 15 is arranged above the casing and is rigidly coupled to the shaft 5. The cover supports a secondary shaft 16 which is substantially perpendicular to the shaft 5 and has a splined end 17 which is suitable to be connected to a power take-off (not shown) and another end which is shaped like a bevel pinion 18, which in turn engages a ring gear 19 which is fixed to the upper base of the casing 2. The lateral surface of the cover 15 accommodates the phase variator comprising a rotation means 20 which is composed of a hollow cylindrical body 21 and of a pivot 22 which mutually interact. The cylindrical body 21 is rotatably coupled to the central shaft 5 above the cam 7 and supports a fork tab at the upper edge. The fork tab forms an open hollow 26 with flat, parallel and facing lateral surfaces. The cylindrical body 21 is rigidly connected, in a lower region, to the cam 7 by virtue of the interposition of inserts 23 at the interface and is retained, in an upward region, by the lower edge of a circular hollow tab 24 of the cover 15 which surrounds the central shaft 5, with a bush 25 interposed. The outer lateral surface of the body 21 constitutes the seat for the inner ring of the upper bearing 4, the outer ring of which supports the upper portion of the casing 2. The inner ring is retained in its seat in a per se known manner, in a lower region, by a thin ring 29 which is inserted in a circumferential slot formed in the lateral surface and, in an upper region, by a shoulder which corresponds to the upper edge of the cylindrical body 21. The pivot 22 is arranged so as to be parallel to the shaft in a hole formed in the lateral surface and has, at its lower end, a flat head which supports an eccentric tooth 28 which engages the hollow 26. At its other end, the pivot 22 is provided with an actuation lever 27 which is substantially perpendicular to the shaft 5, with an angular stroke in both directions of rotation of at least 1/4 of a round angle starting from the central position.

In the above mentioned agricultural applications, the reduction unit is provided with an axle which is associated with the central shaft 5 and supports two wheels, and with a sleeve 30 for each arm 13, which is in turn provided with a set of downward-facing prongs 31. The reduction unit is then connected, to a tractor 33 by means of a lever system 32 and is connected to the power take-off of the tractor by means of a cardan shaft (not shown).

The operation, with particular reference to Fig. 6, is as follows:
-- If the operator wishes to advance the working phase of the arms 13: while the reduction unit is not moving, the operator acts manually on the actuation lever 27, turning it at will counterclockwise so that the tooth 28, by acting on the hollow 26, forces a counterclockwise rotation of the cylindrical body 21, which in turn forces the same rotation of the cam 7, the slot 11 of which turns all the arms 13 counterclockwise.
-- If the operator wishes to delay the working phase of the arms 13: while the reduction unit is not moving, the operator manually acts on the actuation lever 27, turning it in the opposite direction so as to force successive clockwise rotations of all the above mentioned members.

In practice it has been found that the invention achieves the intended aim and objects, since the working phase of the arms can be changed in fully safety by virtue of a simple rotation of the actuation lever, which is located in an easily reachable position. The actuation lever can also be provided with an indicator which shows the applied variation on, for example, a semicircular scale (not shown) which is associated with the lateral surface of the cover.

The materials used, as well as the contingent shapes and dimensions, may of course be any according to the requirements and the state of the art.

## Claims

1. A phase variator, particularly for a rotary oscillating reduction gear, comprising a casing (2) which rotates about a shaft (5) and forms a cavity (6) around it, at least one cam (7) which can freely rotate with respect to said shaft (5) and is arranged in said cavity (6), said cam (7) having a profile which acts as a guide for a plurality of oscillating arms (13), and a cover (15) which is rigidly coupled to said shaft and supports a secondary shaft (16), adapted to be connected to a power take-off, said secondary shaft being associated to a bevel pinion (18) which engages a toothed profile (19) which is monolithically associated with said casing (2), at least one rotation means (20) being connected to said cam (7) and being accommodated in the lateral surface of said cover;
**characterized in that**
said rotation means (20) comprises at least one hollow cylindrical body (21) which is rotatably coupled to said shaft (5) and is provided with at least one fork tab, and at least one pivot (22) which has a flat head at one end which supports a tooth (28) which is eccentric with respect to said pivot and engages the open hollow (26) formed by said fork.

2. The variator according to claim 1, **characterized in that** the surfaces of said hollow (26) of said fork, which laterally delimit said tooth, are flat and parallel and face each other.

3. The variator according to claim 1, **characterized in that** said pivot (22) is arranged substantially parallel to said shaft (5) within a hole formed in the lateral surface of said cover (15).

4. The variator according to claim 3, **characterized in that** said pivot (22) supports, at the opposite end with respect to said head, an actuation lever (27) for said rotation means.

5. The variator according to claim 4, **characterized in that** the angular stroke of said actuation lever (27) is at least 90° in both directions of rotation starting from its central position.

6. The variator according to claim 5, **characterized in that** it comprises a scale arranged on the lateral surface of said cover (15) and is associated with said actuation lever (27) so as to indicate the phase variations.

7. The variator according to claim 1, **characterized in that** said rotation means (20) is rigidly connected to said cam (7) by interposing inserts (23) at the interface between the lower edge of said hollow cylindrical body and the upper base of said cam.

8. The variator according to one or more of the preceding claims, **characterized in that** said hollow cylindrical body (21) is retained, in an upper region, by the lower edge of a hollow cylindrical tab (24) of said cover which surrounds said shaft with a bush interposed.

9. The variator according to one or more of the preceding claims, **characterized in that** the outer lateral surface of said hollow cylindrical body (21) has a seat which is concentric to said shaft for the inner ring of a rolling bearing (4) which in turn supports, for the outer ring, the upper portion of said casing (2).

10. The variator according to claim 9, **characterized in that** said inner ring is retained in said seat, in an upper region, by a circular shoulder which is formed on said outer lateral surface of said cylindrical body and, in a lower region, by a ring (29) which is inserted in a circumferential slot formed in said surface.

## Patentansprüche

1. Phasenanlagevariator, insbesondere für ein rotierendes, oszillierendes Reduktionsgetriebe, der ein Gehäuse 2, welches um eine Achswelle 5 rotiert und um diese einen Hohlraum 6 bildet, wenigstens eine Nockenscheibe 7, die bezüglich der Achswelle 5 frei rotieren kann und in dem Hohiraum 6 angebracht ist, wobei die Nockenscheibe 7 ein Profil aufweist, das als Führung für eine Mehrzahl oszillierender Arme 13 dient, und eine Abdeckung 15, die mit der Achswelle fest verbunden ist und eine zweite Achswelle 16 trägt, die dazu geeignet ist, mit einem Zapfwelienantrieb verbunden zu werden, wobei die zweite Achswelle mit einem Antriebskegelrad 18 verbunden ist, welches ein Zahnprofil 19 antreibt, das mit dem Gehäuse 2 monolithlsch verbunden ist und wenigstens ein Rotationsmittel 20, welches mit der Nockenscheibe 7 verbunden ist und in der seitlichen Oberfläche der Abdeckung aufgenommen ist, aufweist,
**dadurch gekennzeichnet, dass**
das Rotationsmittel 20 wenigstens einen hohlen zylindrischen Körper 21, der mit der Achswelle 5 rotierbar verbunden und mit wenigstens einem Gabelvorsprung ausgestattet ist und wenigstens einen Zapfen 22, der an einem Ende einen flachen, einen Zahn 28 tragenden Kopf hat, der exzentrisch bezüglich des Zapfens ist und in die durch die Gabel geformte offene Aussparung 26 eingreift, aufweist.

2. Variator nach Anspruch 1, **dadurch gekennzeichnet, dass** die Oberflächen der Aussparung 26 der Gabel, die den Zahn seitlich begrenzen, flach und parallel sind und einander gegenüber liegen.

3. Variator nach Anspruch 1, **dadurch gekennzeichnet. dass** der Zapfen 22 im Wesentlichen parallel zur Achswelle 5 in einem in der seitlichen Oberfläche der Abdeckung 50 geformten Loch angebracht ist.

4. Variator nach Anspruch 3, **dadurch gekennzeichnet, dass** der Zapfen 22 an dem dem Kopf gegenüberllegenden Ende einen Betätigungshandgriff 27 für das Rotationsmittel trägt.

5. Variator nach Anspruch 4, **dadurch gekennzeichnet, dass** die Weite der Drehung des Betätigungshandgriffs 27 wenigstens 90 ° in beide Richtungen der Rotation ausgehend von seiner mittleren Position ist.

6. Variator nach Anspruch 5, **dadurch gekennzeichnet, dass** er eine Skala aufweist, die an der seitlichen Oberfläche der Abdeckung 15 angebracht und mit dem Betätigungshandgriff 27 so verbunden ist, dass sie die Phasenvariationen anzeigt.

7. Variator nach Anspruch 1, **dadurch gekennzeichnet, dass** das Rotationsmittel 20 durch an der Verbindung zwischen der unteren Kante des hohien zylindrischen Körpers und der oberen Anlage der Nockenscheibe positionierte Einsatzstöcke 23 fest mit der Achswelle 7 verbunden ist.

8. Variator nach einem oder mehreren der vorstehenden Ansprüche, **dadurch gekennzeichnet, dass** der hohle zylindrische Körper 21 in einer oberen Region durch die untere Kante eines hohlen zylindrischen Vorsprungs 24 der Abdeckung gehalten wird, der die Achswelle mit einer zwischenliegenden Buchse umgibt.

9. Variator nach einem oder mehreren der vorstehenden Anspreche, **dadurch gekennzeichnet, dass** die äußere seitliche Oberfläche des hohlen zylindrischen Körpers 21 für den Innenring eines Rollenlagers 4 einen zur Achswelle konzentrischen Sitz aufweist, der über den Außenring den oberen Teil des Gehäuses trägt.

10. Variator nach Anspruch 9, **dadurch gekennzeichnet, dass** der Innenring in einer oberen Region durch eine kreisförmige Schulter, die auf der äußeren seitlichen Oberfläche des zylindrischen Körpers geformt ist und in einer unteren Region von einem Ring 29, der in einer umlaufenden, in die Oberfläche geformte Nut eingesetzt ist, auf seinem Sitz gehalten wird.

## Revendications

1. Variateur de phase, en particulier pour un mécanisme de réduction oscillant rotatif, comprenant un carter (2) qui toumme autour d'un arbre (5) et forme une cavité (6) autour de ce dernier, au moins une came (7) qui peut tourner librement par rapport audit arbre (5) et est agencée dans ladite cavité (6), ladite came (7) ayant un profil qui joue le rôle d'un guide pour une pluralité de bras oscillants (13) et un couvercle (15) qui est accouplé rigidement audit arbre et supporte un arbre secondaire (16) adapté pour être relié à une prise de force, ledit arbre secondaire étant associé à un pignon conique (18) qui attaque un profil denté (19) est associé monolithiquement audit carter (2), au moins un moyen de rotation (20) étant relié à ladite came (7) et étant monté dans la surface latérale dudit couvercle,
**caractérisé en ce que**
ledit moyen de rotation (20) comprend au moins un corps cylindrique creux (21) qui est accouplé en rotation audit arbre (5) et est muni au moins d'une patte en forme de fourche et au moins un pivot (22) qui possède à une extrémité une tête plate, qui supporte une dent (28) qui est excentrique par rapport audit pivot et qui attaque le creux ouvert (26) formé par ladite fourche.

2. Variateur selon la revendication 1, **caractérisé en ce que** les surfaces dudit creux (26) de la dite fourche, qui délimite latéralement ladite dent, sont plates et parallèles et se font mutuellement face.

3. Variateur selon la revendication 1, **caractérisé en ce que** ledit pivot (22) est agencé sensiblement parallèlement audit arbre (5) dans un trou formé dans la surface latérale dudit couvercle (15).

4. Variateur selon la revendication 3, **caractérisé en ce que** ledit pivot (22) supporte, à l'extrémité opposée par rapport à ladite tête, un levier d'actionnement (27) pour ledit moyen de rotation.

5. Variateur selon la revendication 4, **caractérisé en ce que** la course angulaire dudit levier d'actionnement (27) est au moins de 90 ° dans les deux sens de rotation à partir de sa position centrale.

6. Variateur selon la revendication 5, **caractérisé en ce qu'**il comprend une échelle graduée disposée sur la surface latérale dudit couvercle et qui est associée audit levier d'actiormement (27) de manière à indiquer les variations de phase.

7. Variateur selon la revendication 1, **caractérisé en ce que** ledit moyen de rotation (20) est relié rigidement à ladite came (7) en interposant des inserts (23) à l'interface entre le bord inférieur dudit corps cylindrique creux et la base supérieure de ladite came.

8. Variateur selon une ou plusieurs des revendications précédentes, **caractérisé en ce que** ledit corps cylindrique creux (21) est retenu, dans une région supérieure, par le bord inférieur d'une patte cylindrique creuse (24) dudit couvercle qui entoure ledit arbre avec interposition d'une douille.

9. Variateur selon une ou plusieurs des revendications précédentes, **caractérisé en ce que** la surface latérale extérieure dudit corps cylindrique creux (21) possède un siège qui est concentrique audit arbre pour une bague intérieure d'un palier à roulement (4) qui supporte à son tour, pour la bague extérieure, la partie supérieure dudit carter (2).

10. Variateur selon la revendication 9, **caractérisé en ce que** ladite bague intérieure est retenue dans ledit siège dans une région supérieure par un épaulement circulaire qui est formé sur ladite surface intérieure dudit corps cylindrique et, dans une région inférieure, par une bague (29) qui est insérée dans une fente circonférencielle formée dans ladite surface.
